# EUROPEAN PATENT SPECIFICATION

(11) **EP 2 956 650 B1**
(45) Date of publication and mention of the grant of the patent: **31.07.2019**
(21) Application number: 14705678.2
(22) Date of filing: 06.02.2014
(51) Int. Cl.: F02D 41/00

(54) **CONTROLLING AN EXHAUST GAS RECIRCULATION (EGR) VALVE**
STEUERUNG EINES ABGASRÜCKFÜHRUNGSVENTILS
COMMANDE D'UNE VALVE DE RECIRCULATION DES GAZ D'ÉCHAPPEMENT (RGE)

(30) Priority: 13.02.2013 US 201313766016
(43) Date of publication of application: 23.12.2015
(73) Proprietor: Woodward, Inc., Fort Collins, Colorado 80524 (US)
(72) Inventor: SUHRE, Blake R., Villa Park, Illinois 60187 (US)
(74) Representative: Conroy, John
(86) International application number: PCT/US2014/015122
(87) International publication number: WO 2014/126781

(56) References cited:
- EP-A2- 0 964 141
- WO-A1-01/66925
- WO-A1-2012/128224
- US-A1- 2006 207 580
- US-A1- 2007 289 582

## Description

### CLAIM OF PRIORITY

This application claims priority to U.S. Patent Application No. 13/766,016 filed on February 13, 2013.

### BACKGROUND

This specification relates to controlling an exhaust gas recirculation (EGR) valve in an engine system. EGR is commonly used in diesel engine systems. Diesel engines are typically designed to run unthrottled and may include a mechanism configured to generate a pressure differential between the intake and exhaust tracts to flow the desired amount of exhaust gas back to the intake manifold. Many diesel gas exchange system configurations include an EGR valve that has a throttle assembly between the exhaust ports and the turbocharger exhaust turbine inlet.

EP 0 964 141 A2 describes an exhaust gas recirculation control apparatus for an internal combustion engine, an outward opening type exhaust gas recirculation (EGR) valve arranged so that an exhaust gas pressure acts in a closing direction thereof is provided in an EGR passage of the internal combustion engine. WO 2012/128224 A1 describes a method for determining the amount of correction for the degree of opening of an EGR valve, the method having: a basic correction amount map creation step, wherein a basic correction amount map (BCM), which indicates the correlation between the rotational frequency, the load factor, and the correction amount when the degree of opening is maintained at a standard degree of opening and the EGR rate is maintained at a target EGR rate, is created on the basis of the correction amounts obtained for each of the different combinations of the rotational frequency and the load factor; and an expanded correction amount map creation step, wherein estimated values for correction amounts not included in the basic correction amount map are obtained by estimating the distribution of the correction amounts not included in the basic correction amount map (BCM) on the basis of the trend for the distribution of the correction amounts included in the basic correction amount map (BCM), and an expanded correction amount map (ECM), which indicates the correlation between the estimated values for the rotational frequency, the load factor, and the correction amount when the degree of opening is maintained at the standard degree of opening and the EGR rate is maintained at the target EGR rate, is created. US 2006/207580 A1 describes an EGR valve position control method controls a position of an EGR valve according to a pressure change across the valve and a desired EGR valve position. The method calculates a desired EGR valve position and generates one or more duty cycle control terms based on a difference between the desired EGR valve position and an actual EGR valve position. Additionally, the method provides feedforward control based on the pressure change and the desired EGR valve position in order to generate feedforward duty cycle control terms. The method controls the position of the EGR valve based on the duty cycle control terms.. US 2007/289582 A1 describes an exhaust gas recirculation apparatus for an internal combustion engine , in particular in a motor vehicle, having an exhaust gas recirculation line which can be connected at the inlet end to an exhaust gas system of the internal combustion engine and at the outlet end to a fresh gas system of the internal combustion engine and having a return valve arranged in the exhaust gas recirculation line for adjusting an exhaust gas recirculation rate by varying the flow-through cross section of the exhaust gas recirculation line. To improve the efficacy of the exhaust gas recirculation, the exhaust gas recirculation valve is designed so that it adjusts the respective exhaust gas recirculation rate at least in one operating state of the exhaust gas recirculation apparatus, so that it alternately reduces and increases and/or blocks and opens the flow-through cross section of the exhaust gas recirculation line at predetermined or regulated switching points in time. WO 01/66925 A1 describes an exhaust gas recirculation (EGR) system for an engine with a variable geometry turbocharge incorporates a master rotary electric actuator (REA) with a microprocessor controller receiving condition signals from sensors associated with the turbocharger and the engine control unit (ECU) and positioning the turbine inlet nozzle geometry of the turbocharger in response to a predetermined matrix of the condition signals. A slave REA is connected through an internal processing unit to the controller to position an EGR valve. The processing unit provides an actual position signal to the controller which responds with a desired position signal based on the predetermined condition signal matrix. The processing unit engages the slave REA to position the EGR valve.

### SUMMARY

The invention is a method of controlling an exhaust gas recirculation valve in an engine system as described in independent claim 1; and a controller as described in independent claim 7, for installation in an engine system that includes an exhaust gas recirculation valve, the controller operable to perform operations comprising the method. Further refinement of the invention a described in dependent claims 2 to 6 and 8 to 14.

The details of one or more implementations are set forth in the accompanying drawings and the description below. Other features, objects, and advantages will be apparent from the description and drawings, and from the claims.

### DESCRIPTION OF DRAWINGS

FIG. 1 is a schematic diagram of an example engine system.
FIG. 2 is a schematic diagram of an example EGR valve system.
FIG. 3 is a schematic diagram of an example controller.
FIG. 4 is a flow chart showing an example process for controlling an EGR valve.

Like reference symbols in the various drawings indicate like elements.

### DETAILED DESCRIPTION

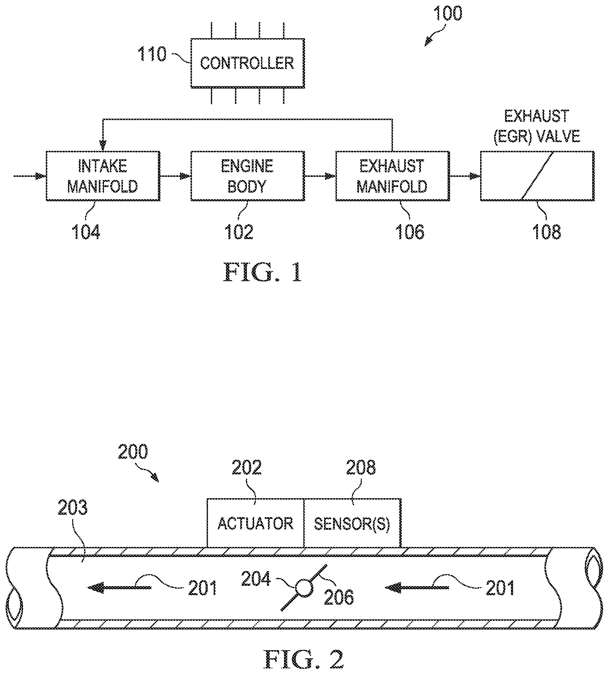

Figure 1 is a schematic diagram of an example engine system 100. The example engine system 100 shown in Figure 1 can be a diesel engine with an exhaust gas recirculation (EGR) subsystem, or the example engine system 100 can be another type of engine. The EGR subsystem can, in some instances, reduce the formation of unwanted emissions (e.g., nitrogen oxides, NOₓ) in the engine system 100. The techniques described here can be applied in the example engine system 100, or in other types of systems having a gas stream with unsteady flow.

The example engine system 100 includes an engine body 102, an intake manifold 104, an exhaust manifold 106, an exhaust gas recirculation (EGR) valve 108, and a controller 110. The engine system 100 can include additional or different components and subsystems. The components of the engine system 100 can be configured as in the example shown in Figure 1, or the components can be configured in another manner.

The intake manifold 104 receives air from an air intake system. In some example engine systems, the air intake system can include, for example, a turbocharger compressor, an intake air cooler, an air intake throttling valve and other components. The intake manifold 104 can also receive exhaust gas from the exhaust manifold 106. The EGR valve 108 can control the flow of exhaust gas into the intake manifold 104. In some instances, there is no inflow of exhaust gas at the intake manifold 104. The intake manifold 104 can provide an air mixture to the engine body 102. The air mixture provided to the engine body 102 can include air from the air intake system, which may be mixed with exhaust gas from the exhaust manifold 106 and possibly other fluids. The intake manifold 104 can include various flow meters, valves, sensors, and other components that are not specifically shown in Figure 1.

The engine body 102 can include various features, components, and subsystems. For example, the engine body 102 can include a combustion chamber, a cylinder, a piston, an ignition system, a fuel injection system, and various other features. The engine body 102 can receive the air mixture (e.g., through an intake valve) from the intake manifold 104 and fuel from a fuel injection system. An ignition system can ignite the air-fuel mixture in the combustion chamber in the engine body 102, which moves the piston and produces the mechanical output of the engine body 102 (*e.g*., rotation of a crank shaft, etc.). The exhaust gas created by combustion of the air-fuel mixture in the engine body 102 can be directed (*e.g*., through an exhaust valve) to the exhaust manifold 106.

The exhaust manifold 106 receives exhaust gas from the engine body 102. The exhaust manifold 106 can communicate the exhaust gas to a component of the exhaust system or another subsystem of the engine system 100. In some implementations, the exhaust manifold 106 directs the exhaust gas through a turbocharger exhaust turbine. From the turbocharger, in such implementations, the exhaust gas can be communicated from the engine system 100, for example, to an external environment. The exhaust manifold 106 can communicate exhaust gas through the EGR valve 108. The exhaust manifold 106 can include various flow meters, valves, sensors, and other components that are not specifically shown in Figure 1.

The EGR valve 108 controls the flow of exhaust gas from the exhaust manifold 106 to the intake manifold 104. For example, the EGR valve 108 can control flow by manipulating (*e.g.*, opening, closing, constricting, dilating, etc.) an exhaust flow path. In the example shown in FIG. 1, the EGR valve 108 is downstream of the EGR manifold branch point. The EGR valve 108 can raise the upstream pressure so that exhaust gas flows back to the intake manifold 104 at a sufficient rate. There may be, and typically are, more valves in an EGR system. Although these are not specifically shown in the example engine system 100, there may also be a valve for metering the flow into the intake manifold 104 as well as an intake throttle valve to further improve the pressure difference from the exhaust manifold 106 to the intake manifold 104 in some instances.

The EGR valve 108 can be closed to increase pressure in the exhaust manifold 106 and thereby increase flow from the exhaust manifold 106 to the intake manifold 104; or the EGR valve 108 can be opened to decrease pressure in the exhaust manifold 106 and thereby decrease flow from the exhaust manifold 106 to the intake manifold 104. The EGR valve position can be controlled over a range of partially-opened positions between a fully opened position and a fully closed position. For example, the controller 110 can send an EGR valve control signal to the EGR valve 108 to control the degree to which the EGR valve permits flow, thereby controlling the flow rate of exhaust gas from the exhaust manifold 106 to the intake manifold 104. The EGR valve 108 can be the example EGR valve system 200 shown in Figure 2, or another type of EGR valve.

In some implementations, exhaust gas pressure generated by the engine system 100 applies a force to the EGR valve 108. For example, the EGR valve 108 can include a throttle valve assembly in fluid communication with the exhaust ports of the engine body 102 and the inlet of a turbocharger exhaust turbine. The throttle valve can experience severe fluid force fluctuations, for example, due to unsteady engine exhaust processes in the exhaust manifold 106. In these and other contexts, exhaust gas can impart an unsteady aerodynamic torque loading on the EGR valve shaft, which can displace the EGR valve from the desired valve position. In some cases, the unsteady loading on the EGR valve can cause the valve to repeatedly hit its end-of-travel stop, which may cause mechanical instability or failure of the EGR valve.

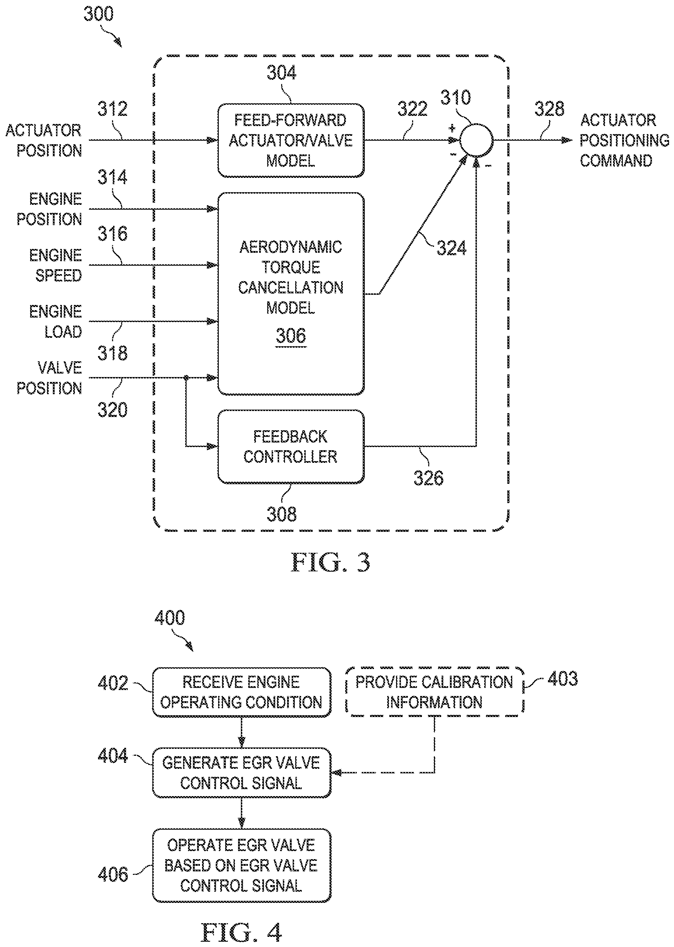

The controller 110 controls operation of the EGR valve 108. In some cases, the controller 110 can generate an EGR valve control signal configured to achieve a desired EGR valve position. The controller 110 can generate the EGR valve control signal based on data stored in memory, data received from the EGR valve 108, engine operating condition data from sensors installed in the engine system 100, or a combination of these and other data. The controller 110 can send the EGR valve control signal to the EGR valve 108 to control the position of the EGR valve 108. The controller 110 can be the example controller 300 shown in Figure 3 or another type of controller. The controller 110 can be configured to perform some or all of the operations of the process 400 shown in Figure 4, or the controller 110 can be configured to operate in another manner.

The controller 110 can be a dedicated module that controls operation of a discrete subsystem, such as, for example, the EGR subsystem or the EGR valve 108. The controller 110 can be a module that controls operation of multiple engine components or subsystems. In some implementations, the controller 110 is the engine control unit (ECU) of the engine system 100. For example, the controller 110 may control operation of an ignition system, a fuel injector system, an EGR system, etc.

To reduce or eliminate valve position disturbance created by unsteady exhaust gas pressure on the EGR valve 108, the EGR valve control signal can be calibrated to counteract forces associated with the exhaust gas pressure. For example, a counter-phase torque command signal can be superimposed on a primary position control signal to effectively cancel the aerodynamic torque disturbance. The calibrated EGR valve control signal can be generated by the controller 110 based on engine operating condition data (e.g., engine load, engine speed, engine position), EGR valve position data, or a combination of these and other data detected in the engine system 100. For example, certain engine operating conditions may be associated with a specified force on the EGR valve 108.

The controller 110 can be configured to receive certain engine operating condition data and generate a control signal (*e.g*., a counter-phase torque command) based on the engine operating condition data. The signal could be developed through a calibration process based on data gathered in the laboratory or data reconstructed from information produced by the actuator itself, such as current feedback, as it is subject to the torque disturbance while deployed in the engine system 100. In some cases, an adaptive calibration technique can be used. For example, the controller 110 can generate the EGR valve control signal based on the instantaneous actuator torque. As such, the controller 110 may be configured to receive data from the EGR valve, such as current, that is proportional to the instantaneous actuator torque.

The EGR valve control algorithm can be deployed within an embedded controller residing in a "smart" EGR valve (*i.e.,* an EGR valve containing its own on-board position controller), or the EGR valve control algorithm can be deployed in another engine component (*e.g.*, the engine control unit (ECU), etc.). As such, the controller 110 can be fully or partially embedded in the EGR valve 108, or it can be implemented apart from the EGR valve 108.

In some cases, the controller 110 can detect an operation state of the engine system 100, for example, by receiving data from various sensors in the engine system 100. For example, the data from a particular sensor can indicate a particular engine operating condition. In some instances, the controller 110 can receive sensor data directly from one or more sensors. In some instances, sensor data may be stored, processed, or formatted before the sensor data is received by the controller 110. For example, the controller 110 may receive the sensor data from another controller in the engine system 100 or from a memory in the engine system 100.

The sensors in the engine system 100 can include, for example, pressure sensors, temperature sensors, accelerometers, position sensors, etc. In some implementations, one or more pressure sensors in the intake manifold 104 provide data that indicate the engine load; one or more engine revolution sensors in the engine body 102 provide data that indicate the engine speed (*e.g*., based on the revolution speed of a crank shaft, etc.); and one or more position sensors in the engine body 102 provide data that indicate engine position (*e.g*., based on the position of a piston, etc.). In some implementations, one or more position sensors in the EGR valve 108 provide data that indicate the position of the EGR valve shaft or the EGR valve actuator, etc.

Figure 2 is a schematic diagram of an example EGR valve system 200. The example EGR valve system 200 includes an actuator 202, one or more sensors 208, a flow path 203, a valve shaft 204, and a valve plate 206. The EGR valve system 200 can include additional or different components, and the components of the EGR valve system 200 can be configured in the manner shown in Figure 2 or in another manner. Moreover, the EGR valve system 200 may function in the manner represented in Figure 2, or the EGR valve system 200 may operate in another manner. The control techniques implemented in the example EGR valve system 200 can be applied to other types of systems that involve an unsteady flow of gas.

The flow path 203 of the example EGR valve system 200 can provide fluid communication for exhaust gas 201 between an exhaust manifold and an air intake manifold of an engine system. The valve shaft 204 and the valve plate 206 are disposed in the flow path 203. The actuator 202 can apply a rotational force to the valve shaft 204 to control the position (*e.g*., orientation) of the valve plate 206 within the flow path 203. The position of the valve plate 206 within the flow path 203 can determine the degree to which the flow path 203 permits flow. The valve plate 206 can have a range of positions that correspond to a range of effective open cross-sectional areas in the flow path 203. In a fully closed position, the valve plate 206 can prevent flow through the flow path 203.

The exhaust gas 201 in the flow path 203 of the example EGR valve system 200 can apply an aerodynamic torque to the valve plate 206. In some cases, variations in exhaust gas pressure force the valve plate 206 towards a more closed position or towards a more open position. In some instances, aerodynamic loading on the valve plate 206 can cause the valve plate 206 to contact an end-of-travel stop, which can cause mechanical wear or failure. The example EGR valve system 200 can be controlled in a manner that reduces movement of the valve plate 206 caused by variations in exhaust gas pressure in the flow path 203. For example, the EGR valve system 200 can be operated by an EGR valve control signal that is calibrated to counteract forces associated with variations in exhaust gas pressure. In some instances, the EGR valve control signal is calibrated to apply a torque on the valve shaft 204 that is opposite (in direction) and equal (in magnitude) to the torque applied to the valve shaft 204 by an exhaust gas pressure event associated with a specified engine operating condition.

The actuator 202 of the example EGR valve system 200 can receive the EGR valve control signal from a controller. For example, the EGR valve system 200 can include an on-board controller as part of the EGR valve assembly. In some cases, the EGR valve system 200 is operably connected to an external controller (*e.g*., an engine control unit or another type of controller). The EGR valve control signal can control the position of the actuator 202, which in turn controls the position of the valve shaft 204 and the valve plate 206.

The sensor(s) 208 of the example EGR valve system 200 can detect operating conditions in the EGR valve system 200 and provide the data to the controller or another component. For example, the sensor(s) 208 can include one or more position sensors that sense the position of the actuator 202, the valve shaft 204, or the valve plate 206; the sensor(s) 208 can include one or more flow meters, pressure sensors, temperature sensors, or other sensors that detect fluid or thermodynamic conditions in the flow path 203.

Figure 3 is a schematic diagram of an example controller 300. The controller 300 can be, for example, an engine control unit (ECU) of an engine system or an on-board controller of an EGR valve. Other types of controllers may be used. The example controller 300 includes a feed-forward actuator/valve model 304, an aerodynamic torque cancellation model 306, a feedback controller 308, and a combiner 310. The controller 300 can include additional or different features, modules, and components. Moreover, a controller can be configured to operate in the manner represented in Figure 3, or a controller can be configured to operate in another manner. The controller 300 shown in Figure 3 is provided as one example, which can be modified or substituted for other types of controllers. The control techniques used by the example controller 300 shown in Figure 3 can be equally applied to any gas stream with unsteady flow.

In the example shown in Figure 3, the controller 300 generates an EGR valve control signal based on various data inputs. The data inputs shown in Figure 3 include data detected at the EGR valve and engine operating conditions detected in the engine system. The data detected at the EGR valve include the actuator position 312 and the valve position 320. The engine operating conditions include the engine position 314, the engine speed 316, and the engine load 318. The controller 300 can operate on additional or different data inputs. In the example shown in Figure 3, the EGR valve control signal provided by the controller 300 is an actuator positioning command 328. The controller 300 can produce additional or different outputs, including other types of EGR valve control signals.

As shown in Figure 3, the feed-forward actuator/valve model 304 of example controller 300 receives the actuator position 312 and generates a primary actuator-position-command 322. The aerodynamic torque cancellation model 306 receives the engine position 314, engine speed 316, engine load 318, and valve position 320 and generates a supplemental actuator-position-command 324. The supplemental actuator-position-command 324 can be generated, for example, by mapping the inputs (engine position 314, engine speed 316, engine load 318, and valve position 320) to a pre-calibrated command, or the supplemental actuator-position-command 324 can be generated in another manner. The feedback controller 308 receives the valve position 320 and generates a feedback actuator-position-command 326.

The primary actuator-position-command 322 of the example controller 300 can be, for example, a command signal configured to achieve a specified position of the EGR valve actuator without compensating for exhaust gas pressure on the EGR valve. The supplemental actuator-position-command 324 can be, for example, a command signal configured to apply a force on the EGR valve that is equal in magnitude to the predicted force resulting from exhaust gas pressure on the EGR valve. The feedback actuator-position-command 326 can be, for example, a command signal configured to correct the valve position based on the detected valve position 320.

The combiner 310 of the example controller 300 receives the primary actuator-position-command 322, the supplemental actuator-position-command 324, and the feedback actuator-position-command 326. The combiner 310 generates the actuator positioning command 328 by a specified combination of the primary actuator-position-command 322, the supplemental actuator-position-command 324, and the feedback actuator-position-command 326. In the example shown in Figure 3, the actuator positioning command 328 is generated by subtracting the supplemental actuator-position-command 324 and the feedback actuator-position-command 326 from the primary actuator-position-command 322. Here, the supplemental actuator-position-command 326 is subtracted so as to create a counter-phase torque on the EGR valve actuator; the counter-phase torque applies a force in the opposite direction of the force applied by exhaust gas pressures. The actuator positioning command 328 can be generated in another manner, for example, based on a different combination of the command signals generated in the controller 300 and other data.

Figure 4 is a flow chart showing an example process 400 for controlling an EGR valve. The example process 400 can be used to control an EGR valve, such as, for example, the example EGR valve 108 shown in Figure 1 or the example EGR valve system 200 shown in Figure 2. The process 400 can be used in other contexts, for example, to control another type of valve. The process 400 can include additional or different operations. The operations can be performed in the order shown in Figure 4, or in some cases the operations can be performed in another order. Some aspects of the process 400 can be iterated or repeated. For example, the process 400 can be iterated periodically during engine operation, or the process 400 can be initiated from time to type by a specified condition or external stimulus. In some cases, the process 400 can be repeated (*e.g*., continuously) until a terminating condition is reached.

The operations in the example process 400 can be performed by a controller in an engine system, such as, for example, the example controller 110 shown in Figure 1 or the example controller 300 shown in Figure 3. In some implementations, all or part of the process 400 is performed by an engine control unit (ECU). In some implementations, all or part of the process is performed by an EGR valve controller that is embedded in an EGR valve assembly. The operations can be performed by other types of systems or apparatus, including other types of controllers.

At 402 of the example process 400 shown in Figure 4, an engine operating condition is received. The engine operating condition can be an engine operating condition that is detected in the engine system. For example, one or more sensors in the engine system may be configured to monitor engine operating conditions. In some implementations, the engine operating conditions include engine speed, engine position, engine load, or a combination of these and possibly other conditions. The engine operating condition can be received by a controller or another component directly from the sensor that detected the engine operating condition, or the engine operating condition can be received from memory or another source. In some implementations, additional data are received. For example, an actuator position, valve position, or other information can be received from the EGR valve.

At 404 of the example process 400, an EGR valve control signal is generated. The EGR valve control signal can be generated based on the engine operating condition received at 402. The EGR valve control signal can be calibrated to counteract a predicted force on the EGR valve resulting from exhaust gas pressure associated with the engine operating condition. In some cases, the predicted force is the torque that the EGR valve shaft typically experiences under the received engine operating condition.

The EGR valve control signal can be generated based on some or all of the received engine operating conditions. For example, the EGR valve control signal can be generated based on the engine speed, the engine position, the engine load, other engine operating conditions, or any combination of two or more these. The EGR valve control signal can be generated based on multiple additional factors or other types of information. For example, the EGR valve control signal can be generated based on the engine operating condition and the valve position or the actuator position of the EGR valve.

The EGR valve control signal can be a voltage signal, a current signal, or another type of electrical signal that is operable to control the operational state of the EGR valve. For example, the EGR valve control signal can be configured to open or close the EGR valve completely, or to a specified degree. In some implementations, the EGR valve control signal is an actuator command signal that is configured to control the position of the EGR valve actuator. The actuator command signal can be generated by any suitable technique or process. In some cases, the actuator command signal is generated by superimposing a counter-phase torque signal on a primary actuator command signal. The primary actuator command signal can be, for example, the command signal that controls the position of the EGR valve actuator without compensating for the predicted force on the EGR valve resulting from exhaust gas pressure. The counter-phase torque signal can be, for example, an independently-generated command signal that causes the EGR valve actuator to apply a force to the EGR valve that is equal in magnitude and opposite in direction to the predicted force resulting from exhaust gas pressure.

In some implementations, a primary actuator-positioning-command signal is configured to control the position of an EGR valve actuator, for example, independent of exhaust gas pressure. A supplemental actuator-positioning-command signal can be generated based on the detected engine operating condition. The supplemental actuator-positioning-command signal can be the counter-phase torque signal discussed above, or a different supplemental actuator-positioning-command signal can be used. The EGR valve control signal can be generated by combining the supplemental actuator-positioning-command signal with the primary actuator-positioning-command signal.

In some implementations, the EGR valve control signal is generated by mapping the detected engine operating condition (and possibly other information) to a pre-calibrated control signal. For example, the EGR valve control signal can be calibrated based on previously-generated calibration data. In some implementations, the EGR valve signal can be generated based on an adaptive strategy. For example, a signal that is proportional to the instantaneous actuator torque, such as current, can be used to generate the EGR valve signal.

In the example shown in Figure 4, calibration information is provided at 403. The calibration data can indicate the predicted force on the EGR valve for various engine operating conditions. For example, the calibration data can indicate, for any specified combination of engine operating condition values, the torque that the EGR valve will experience as a result of exhaust gas pressure for the specified combination of engine operating condition values.

The predicted force on the EGR valve can be "predicted," for example, by the calibration information and associate data. For example, the predicted force can be predicted in the context of a calibration process that identifies the torque on the EGR valve due to exhaust gas pressure for various conditions, including engine operating conditions. In some implementations, the predicted force is predicted to occur in response to a specified combination of engine operating conditions, and the EGR valve control signal can be generated such that the predicted force is predicted to occur at least during the time when the EGR valve control signal is applied to control the EGR valve. The predicted force may also occur at other times, such as, for example, when the EGR valve control signal is generated or when the engine operating condition is detected.

The calibration information can be provided by a calibration process that is performed before the engine system is in operation, while the engine system is in operation, or both. In some implementations, the calibration information is generated in a laboratory setting or another type of testing environment. For example, the EGR valve could be tested under a range of engine operating conditions. The testing may include, for example, measuring the torque on the EGR valve caused by exhaust gas pressure under a full range of operating conditions, or under range of typical operating conditions. The calibration information can include a mapping of engine operating conditions to EGR valve control data. The calibration information can be stored, for example, in a memory of the controller.

In some implementations, the calibration information is generated based on feedback from operation of the EGR valve in the engine system. For example, current feedback from the EGR valve can be monitored and used to construct calibration information for the EGR valve while deployed in its intended application.

At 406 of the example process 400, the EGR valve is operated based on the EGR valve control signal. The EGR valve can be operated based on additional or different factors. In some implementations, the EGR valve is operated by sending the EGR valve control signal to the EGR valve. For example, an actuator command signal (*e.g.,* the combined actuator-positioning-command signal described above) can be sent to the EGR valve actuator. In some implementations, the EGR valve is operated by applying a force to the EGR valve in response to the EGR valve signal. For example, the EGR valve actuator may apply a force to an EGR valve component (*e.g*., the EGR valve shaft) in response to the EGR valve signal, and the force may cause the component to move (e.g., rotate, translate, etc.). Movement of the EGR valve component may open or close the EGR valve (or cause the EGR valve to become more or less open or closed), which may cause a corresponding increase or decrease in a flow of exhaust gas through the EGR valve.

Some of the functional operations described in this specification, which may include one or more of the operations shown in Figure 4, some or all of the functional operations of the example controller 110 shown in Figure 1 or the example controller 300 shown in Figure 3, etc., can be implemented in software, firmware, or hardware, including the structural means disclosed in this specification and structural equivalents thereof, or in combinations of them. Such functional operations can be implemented as instructions tangibly embodied in a computer-readable medium, in digital logic, or a combination of them. Such instructions (also known as a program, code, or logic) can be executed by, or may control the operation of, a controller. Such controllers may include digital logic circuitry, microcontrollers, programmable processors, and others. The instructions can be written or encoded in any form of code, logic, or program language including compiled, executable, interpreted, assembly, machine, or custom language codes. Such instructions can be deployed in any form, including as a module, device, circuit, component, subroutine, file, sub-file, or other unit, which may be implemented as a standalone, integrated, or embedded system.

Digital controllers may communicate with analog systems or devices by using one or more converters. For example, digital controllers may include or utilize one or more digitizers that convert analog signals to digital signals suitable for digital processing, and digital controllers may include or utilize one or more digital-to-analog converters that convert digital signals to analog signals. In some instances, all or part of a controller may be implemented, for example, as an FPGA (field programmable gate array), an ASIC (application specific integrated circuit), or another type of device.

Controllers suitable for executing instructions tangibly embodied in a computer-readable medium or in digital logic devices may include programmable processors, microcontrollers, digital logic circuitry, or other types of devices. Such controllers may store data in a memory or receive instructions and data from a memory. A memory can store binary data in machine-readable media, logic, circuitry or other configurations. Memory may include random access memory, read only memory, mass storage devices, volatile storage devices, non-volatile storage devices, or other types of memory. Memory may include magnetic devices, magneto optical devices, optical devices, semiconductor devices, or other types of devices.

While this specification contains many details, these should not be construed as limitations on the scope of what may be claimed, but rather as descriptions of features specific to particular examples. Certain features that are described in this specification in the context of separate implementations can also be combined. Conversely, various features that are described in the context of a single implementation can also be implemented separately or in any suitable subcombination.

A number of examples have been described. Nevertheless, it will be understood that various modifications can be made. Accordingly, other embodiments are within the scope of the following claims.

## Claims

1. A method of controlling an exhaust gas recirculation (EGR) valve in an engine system (100), the method comprising:
determining a current valve position of the EGR valve (108);
generating, based on an engine operating condition detected in an engine system (100) and the determined current valve position, an EGR valve control signal, wherein generating the EGR valve control signal comprises an actuator command signal configured to control the position of an EGR valve actuator and calibrated to counteract a predicted torque on an EGR valve shaft of the EGR valve in the engine system (100), the predicted torque resulting from exhaust gas pressure associated with the engine operating condition; and
operating the EGR valve (108) based on sending the actuator command signal to the EGR valve actuator configured to control the position of an EGR valve actuator by applying a counter-phase torque to the EGR valve shaft, the counter-phase torque and the predicted torque having substantially equal magnitudes and opposite directions.

2. The method of any preceding claim, comprising generating the EGR valve control signal by mapping the detected engine operating condition to a pre-calibrated control signal.

3. The method of any preceding claim, comprising generating the EGR valve control signal based on:
a current engine operating condition detected in the engine system (100).

4. The method of any preceding claim, comprising generating the EGR valve control signal based on engine operating conditions that include at least one of an engine load, an engine speed, or an engine position.

5. The method of any preceding claim, comprising generating the EGR valve control signal based on engine operating conditions that include an engine load (318), an engine speed (316), and an engine position (314).

6. The method of any preceding claim, comprising calibrating the EGR valve control signal based on feedback from operation of the EGR valve (108) in the engine system (100).

7. The method of any preceding claim, wherein generating the EGR valve control signal comprises:
receiving an initial actuator-positioning-command signal configured to control the position of an EGR valve actuator;
generating a supplemental actuator-positioning-command signal based on the detected engine operating condition; and
generating a combined actuator-positioning-command signal by combining the initial actuator-positioning-command signal with the supplemental actuator-positioning-command signal,
wherein operating the EGR valve (108) by the EGR valve control signal comprises sending the combined actuator-positioning-command signal to the EGR valve actuator.

8. A controller (110) for installation in an engine system (100) that includes an exhaust gas recirculation (EGR) valve, the controller (110) operable to perform operations comprising the method of any one of claims 1 to 7.

9. An engine system (100) comprising:
an exhaust gas recirculation (EGR) valve; and
a controller according to claim 8.

10. The engine system of claim 9, wherein the controller (110) is an engine control unit.

11. The engine system of claim 9 or claim 10, comprising an EGR valve assembly that includes the EGR valve (108) and the controller (110).

12. The engine system of anyone of claims 9 to 11, wherein the EGR valve (108) comprises an EGR valve actuator mechanically coupled to an EGR valve shaft.

13. The engine system of claim 12, wherein the predicted force comprises a predicted torque on the EGR valve shaft, and operating the EGR valve (108) comprises applying a counter-phase torque to the EGR valve shaft, the counter-phase torque and the predicted torque having substantially equal magnitudes and opposite directions.

14. The engine system of claim 12 or claim 13, wherein generating the EGR valve control signal comprises generating an actuator command signal configured to control the position of the EGR valve actuator, and operating the EGR valve comprises sending the actuator command signal to the EGR valve actuator.

## Patentansprüche

1. Verfahren zum Steuern eines Abgasrückführungsventils (Exhaust Gas Recirculation valve, EGR-Ventil) in einem Motorsystem (100), wobei das Verfahren umfasst:
Ermitteln einer aktuellen Ventilstellung des EGR-Ventils (108);
Erzeugen aufgrund einer Motorbetriebsbedingung, die in einem Motorsystem (100) erkannt wird, und aufgrund der ermittelten aktuellen Ventilstellung, eines EGR-Ventilsteuersignals, wobei das Erzeugen des EGR-Ventilsteuersignals ein Stellgliedbefehlssignal umfasst, das ausgelegt ist, um die Stellung eines EGR-Ventilstellglieds zu steuern, und das kalibriert ist, um einem vorhergesagten Drehmoment an einer EGR-Ventilwelle des EGR-Ventils in dem Motorsystem (100) entgegenzuwirken, wobei das vorhergesagte Drehmoment, von einem Abgasdruck herrührt, welcher der Motorbetriebsbedingung zugeordnet ist; und
Betreiben des EGR-Ventils (108) aufgrund eines Sendens des Stellgliedbefehlssignals, das ausgelegt ist, um die Stellung eines EGR-Ventilstellglieds zu steuern, an das EGR-Ventilstellglied, indem ein gegenphasiges Drehmoment auf die EGR-Ventilwelle angewandt wird, wobei das gegenphasige Drehmoment und das vorhergesagte Drehmoment im Wesentlichen eine gleiche Größe aber entgegengesetzte Richtungen aufweisen.

2. Verfahren nach einem der vorhergehenden Ansprüche, das ein Erzeugen des EGR-Ventilsteuersignals umfasst, indem die erkannte Motorbetriebsbedingung auf ein vorkalibriertes Steuersignal abgebildet wird.

3. Verfahren nach einem der vorhergehenden Ansprüche, das ein Erzeugen des EGR-Ventilsteuersignals auf der Grundlage einer aktuellen Motorbetriebsbedingung umfasst, die in dem Motorsystem (100) erkannt wird.

4. Verfahren nach einem der vorhergehenden Ansprüche, das ein Erzeugen des EGR-Ventilsteuersignals auf der Grundlage von Motorbetriebsbedingungen umfasst, die mindestens eine einer Motorlast, einer Motordrehzahl oder einer Motorstellung aufweisen.

5. Verfahren nach einem der vorhergehenden Ansprüche, das ein Erzeugen des EGR-Ventilsteuersignals auf der Grundlage von Motorbetriebsbedingungen umfasst, die mindestens eine einer Motorlast (318), einer Motordrehzahl (316) oder einer Motorstellung (314) aufweisen.

6. Verfahren nach einem der vorhergehenden Ansprüche, das ein Kalibrieren des EGR-Ventilsteuersignals auf der Grundlage einer Rückmeldung von dem Betrieb des EGR-Ventils (108) in dem Motorsystem (100) umfasst.

7. Verfahren nach einem der vorhergehenden Ansprüche, wobei das Erzeugen des EGR-Ventilsteuersignals umfasst:
Empfangen eines anfänglichen Stellgliedeinstellbefehlssignals, das ausgelegt ist, um die Stellung eines EGR-Ventilstellglieds zu steuern;
Erzeugen eines ergänzenden Stellgliedeinstellbefehlssignals auf der Grundlage der erkannten Motorbetriebsbedingung; und
Erzeugen eines kombinierten Stellgliedeinstellbefehlssignals, indem das anfängliche Stellgliedeinstellbefehlssignal mit dem ergänzenden Stellgliedeinstellbefehlssignal kombiniert wird,
wobei das Betreiben des EGR-Ventils (108) durch das EGR-Ventilsteuersignal ein Senden des kombinierten Stellgliedeinstellbefehlssignals an das EGR-Ventilstellglied umfasst.

8. Steuereinheit (110) für eine Installation in einem Motorsystem (100), das ein Abgasrückführungsventil (Exhaust Gas Recirculation valve, EGR-Ventil) aufweist, wobei die Steuereinheit (110) funktionsfähig ist zum Ausführen von Operationen, die das Verfahrens nach einem der Ansprüche 1 bis 7 umfassen.

9. Motorsystem (100), umfassend:
ein Abgasrückführungsventil (Exhaust Gas Recirculation valve, EGR-Ventil); und
eine Steuereinheit nach Anspruch 8.

10. Motorsystem nach Anspruch 9, wobei die Steuereinheit (110) eine Motorsteuereinheit ist.

11. Motorsystem nach Anspruch 9 oder Anspruch 10, das eine EGR-Ventilanordnung umfasst, die das EGR-Ventil (108) und die Steuereinheit (110) aufweist.

12. Motorsystem nach einem der Ansprüche 9 bis 11, wobei das EGR-Ventil (108) ein EGR-Ventilstellglied umfasst, das mit einer EGR-Ventilwelle mechanisch verbunden ist.

13. Motorsystem nach Anspruch 12, wobei die vorhergesagte Kraft ein vorhergesagtes Drehmoment auf die EGR-Ventilwelle umfasst, und wobei das Betreiben des EGR-Ventils (108) ein Anwenden eines gegenphasigen Drehmoments auf die EGR-Ventilwelle umfasst, wobei das gegenphasige Drehmoment und das vorhergesagte Drehmoment im Wesentlichen eine gleiche Größe aber entgegengesetzte Richtungen aufweisen.

14. Motorsystem nach Anspruch 12 oder Anspruch 13, wobei das Erzeugen des EGR-Ventilsteuersignals ein Erzeugen eines Stellgliedbefehlssignals umfasst, das ausgelegt ist, um die Stellung eines EGR-Ventilstellglieds zu steuern; und wobei das Betreiben des EGR-Ventils ein Senden des Stellgliedbefehlssignals an das EGR-Ventilstellglied umfasst.

## Revendications

1. Procédé de pilotage d'une soupape de recirculation des gaz d'échappement (EGR) dans un système moteur (100), le procédé comprenant:
la détermination d'une position de soupape actuelle de la soupape EGR (108);
la génération, sur la base d'une condition de fonctionnement de moteur détectée dans un système moteur (100) et de la position de soupape actuelle déterminée, d'un signal de pilotage de soupape EGR, la génération du signal de pilotage de soupape EGR comprenant un signal de commande d'actionneur configuré pour piloter la position d'un actionneur de soupape EGR et calibré de manière à contrecarrer un couple prédit sur une tige de soupape EGR de la soupape EGR dans le système moteur (100), le couple prédit résultant de la pression des gaz d'échappement associée à la condition de fonctionnement de moteur; et
le fonctionnement de la soupape EGR (108) sur la base de l'envoi du signal de commande d'actionneur à l'actionneur de soupape EGR configuré pour piloter la position d'un actionneur de soupape EGR par application d'un couple antagoniste à la tige de soupape EGR, le couple antagoniste et le couple prédit possédant des modules sensiblement égaux et des sens opposés.

2. Procédé selon l'une quelconque des revendications précédentes, comprenant la génération du signal de pilotage de soupape EGR par mise en correspondance de la condition de fonctionnement de moteur détectée avec un signal de pilotage précalibré.

3. Procédé selon l'une quelconque des revendications précédentes, comprenant la génération du signal de pilotage de soupape EGR sur la base de:
une condition de fonctionnement de moteur actuelle détectée dans le système moteur (100).

4. Procédé selon l'une quelconque des revendications précédentes, comprenant la génération du signal de pilotage de soupape EGR sur la base de conditions de fonctionnement de moteur qui comportent une charge de moteur et/ou un régime de moteur et/ou une position de moteur.

5. Procédé selon l'une quelconque des revendications précédentes, comprenant la génération du signal de pilotage de soupape EGR sur la base de conditions de fonctionnement de moteur qui comportent une charge de moteur (318), un régime de moteur (316) et une position de moteur (314).

6. Procédé selon l'une quelconque des revendications précédentes, comprenant le calibrage du signal de pilotage de soupape EGR sur la base d'une réaction issue du fonctionnement de la soupape EGR (108) dans le système moteur (100).

7. Procédé selon l'une quelconque des revendications précédentes, comprenant la génération du signal de pilotage de soupape EGR comprend:
la réception d'un signal de commande de positionnement d'actionneur initial configuré pour piloter la position d'un actionneur de soupape EGR;
la génération d'un signal de commande de positionnement d'actionneur supplémentaire sur la base de la condition de fonctionnement de moteur détectée; et
la génération d'un signal de pilotage de positionnement d'actionneur combiné par combinaison du signal de commande de positionnement d'actionneur initial au signal de commande de positionnement d'actionneur supplémentaire,
le fonctionnement de la soupape EGR (108) par le signal de pilotage de soupape EGR comprenant l'envoi du signal de commande de positionnement d'actionneur combiné à l'actionneur de soupape EGR.

8. Unité pilote (110) destinée à être montée dans un système moteur (100) comportant une soupape de recirculation des gaz d'échappement (EGR), l'unité pilote (110) ayant pour fonction d'accomplir des opérations comprenant le procédé selon l'une quelconque des revendications 1 à 7.

9. Système moteur (100), comprenant:
une soupape de recirculation des gaz d'échappement (EGR); et
une unité pilote selon la revendication 8.

10. Système moteur selon la revendication 9, dans lequel l'unité pilote (110) est une unité de pilotage de moteur.

11. Système moteur selon la revendication 9 ou la revendication 10, comprenant un ensemble soupape EGR qui comporte une soupape EGR (108) et l'unité pilote (110).

12. Système moteur selon l'une quelconque des revendications 9 à 11, dans lequel la soupape EGR (108) comprend un actionneur de soupape EGR accouplé mécaniquement à une tige de soupape EGR.

13. Système moteur selon la revendication 12, dans lequel la force prédite comprend un couple prédit sur la tige de soupape EGR, et le fonctionnement de la soupape EGR (108) comprend l'application d'un couple antagoniste à la tige de soupape EGR, le couple antagoniste et le couple prédit possédant des modules sensiblement égaux et des sens opposés.

14. Système moteur selon la revendication 12 ou la revendication 13, dans lequel la génération du signal de pilotage de soupape EGR comprend la génération d'un signal de commande d'actionneur configuré pour piloter la position de l'actionneur de soupape EGR, et le fonctionnement de la soupape EGR comprend l'envoi du signal de commande d'actionneur à l'actionneur de soupape EGR.
